# FASCICULE DE BREVET EUROPEEN

(11) **EP 2 200 889 B1**
(45) Date de publication et mention de la délivrance du brevet: **24.07.2013**
(21) Numéro de dépôt: 08840983.4
(22) Date de dépôt: 20.10.2008
(51) Int. Cl.: B62D 35/02

(54) **CARENAGE SOUS CAISSE D'UN VEHICULE AUTOMOBILE**
UNTERBODENVERKLEIDUNG EINES KRAFTFAHRZEUGES
MOTOR VEHICLE UNDERBODY FAIRING

(30) Priorité: 21.10.2007 FR 0707346
(43) Date de publication de la demande: 30.06.2010
(73) Titulaire: Renault S.A.S., 92100 Boulogne-Billancourt (FR)
(72) Inventeur: SARTIAUX, ROMAIN, F-92370 Chaville (FR); JOUBERT, JEAN-PHILIPPE, F-75015 Paris (FR); BOIREAU, MICHEL, F-78114 Magny Les Hameaux (FR); BARRAQUE, DAVID, F-78220 Viroflay (FR); ANTOINE, CHRISTOPHE, F-95600 Eaubonne (FR)
(86) Numéro de dépôt international: PCT/FR2008/051883
(87) Numéro de publication internationale: WO 2009/053659

(56) Documents cités:
- EP-A- 1 050 448
- EP-A- 1 190 937

## Description

L'invention concerne un carénage sous-caisse pour véhicule automobile et un procédé de fixation d'un tel carénage. Elle concerne aussi un véhicule automobile en tant que tel équipé d'un tel carénage.

Il est courant de disposer des carénages sous la carrosserie d'un véhicule automobile, dont la fonction est d'habiller, protéger et améliorer la performance aérodynamique du véhicule.

Dans l'état de la technique, ces carénages sont fixés manuellement sous la caisse du véhicule par un opérateur agissant les bras tendus sous le véhicule. Pour faciliter cette opération, il est prévu un pré-maintien du carénage à l'aide soit de picots disposés dans les trous de fixation coopérant avec des goujons, soit à l'aide de clips. Dans le premier cas, la mise en place du carénage est difficile car elle s'effectue en aveugle puisque le carénage empêche l'opérateur de voir les points de fixation. Le positionnement des goujons dans les ouvertures correspondantes, qui sont de petites dimensions de l'ordre de 5 millimètres de diamètre, est une opération laborieuse qui induit souvent un temps important qui fatigue l'opérateur agissant les bras tendus. Dans le second cas, les clips s'avèrent fragiles et difficiles à mettre au point, leur moulage nécessitant des presses puissantes et donnant des résultats souvent insatisfaisants quand aux tolérances recherchées. De plus, la présence de ces clips verticaux sur les carénages représente une gêne pour l'empilage et le transport des carénages.

Le document EP1050448 propose un carénage comprenant plusieurs points de fixation formés par des trous.

Ainsi, il existe un besoin d'un autre type de carénage sous-caisse de véhicules automobiles qui ne présente pas les inconvénients des solutions existantes.

Ainsi, un premier objet de l'invention est de proposer un carénage pour véhicule automobile dont les moyens de fixation sont améliorés, plus facilement accessibles, résistants, pour assurer un pré maintien efficace.

Un second objet de l'invention est de proposer un procédé de fixation d'un carénage sur un véhicule automobile qui soit simple, rapide et efficace.

A cet effet, l'invention repose sur un carénage pour dessous de caisse de véhicule automobile, comprendant deux points de fixation pour assurer un pré-maintien du carénage, ces deux points de fixation se présentant sous une forme de clé, avec une zone de fixation débouchant directement sur un bord du carénage par une ouverture, et ces deux points de fixation présentant une orientation différente.

Selon un mode d'exécution, les deux points de fixation peuvent être positionnés sur deux extrémités antérieures du carénage, de manière à déboucher sur deux côtés différents du carénage pour présenter une orientation formant un angle proche de 90 degrés.

Le carénage peut être en matériau plastique souple.

Il peut présenter une petite dimension, de côtés de longueur inférieure à 700 millimètres.

Selon une variante d'exécution, il peut comprendre au moins un des deux points de fixation présentant une partie avec des picots pour favoriser le pré-maintien.

Selon une variante d'exécution, au moins un des deux points de fixation peut présenter une forme en boutonnière débouchante

Selon une autre variante, il peut comprendre au moins un troisième point de fixation.

L'invention porte aussi sur un véhicule automobile comprenant un carénage tel que décrit précédemment.

Enfin, l'invention porte sur un procédé de fixation d'un carénage de véhicule automobile, comprendant une étape de réalisation d'un pré-maintien du carénage qui comprend les étapes suivantes :
- positionnement d'un premier point de fixation en manoeuvrant le carénage dans une première direction ;
- pivotement du carénage autour de ce premier point de fixation pour approcher un second point de fixation ;
- encliquetage du second point de fixation selon une seconde direction.

Ces objets, caractéristiques et avantages de la présente invention seront exposés en détail dans la description suivante d'un mode d'exécution particulier fait à titre non-limitatif en relation avec les figures jointes parmi lesquelles :
La figure 1 représente un carénage selon un mode d'exécution de l'invention ;
la figure 2 représente une vue agrandie d'un premier détail du carénage selon le mode d'exécution de l'invention ;
la figure 3 représente une vue agrandie d'un second détail du carénage selon le mode d'exécution de l'invention.

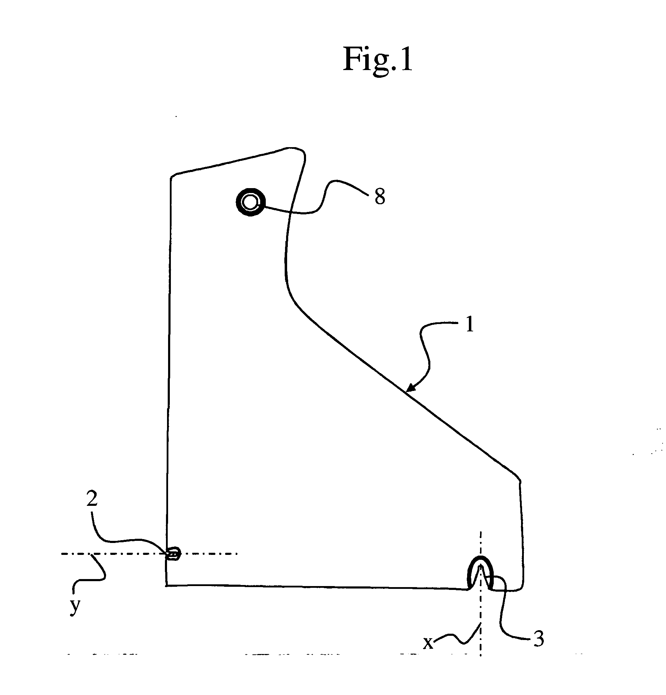

La figure 1 représente un carénage 1, en matériau plastique relativement souple non chargé, et de petite dimension, de côtés de longueur inférieure à 700 millimètres, prévu pour se loger sous la caisse d'un véhicule automobile au niveau de son réservoir. Ce carénage présente deux points de fixation 2, 3, en forme de clés, disposés sur deux extrémités antérieures du carénage. Enfin, il présente un autre point de fixation 8.

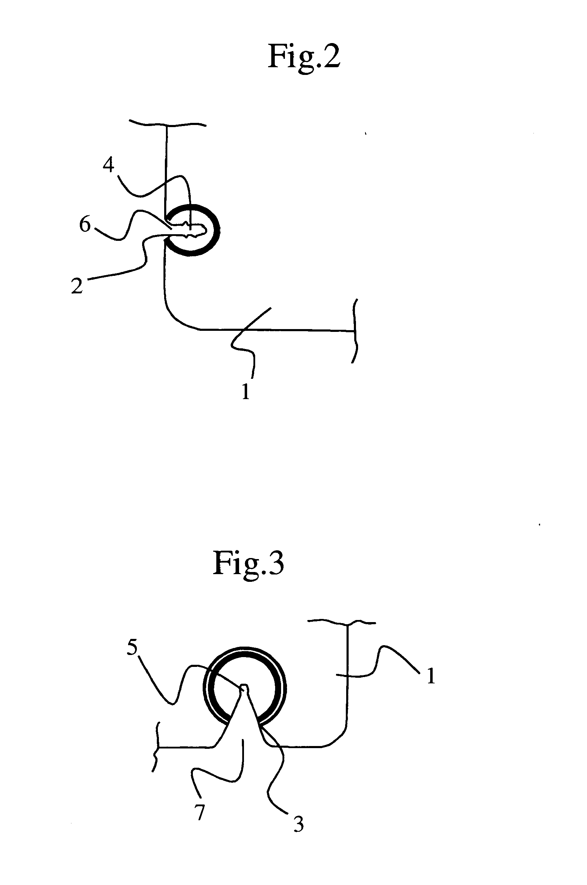

Les deux points de fixation 2, 3 en forme de clés sont représentés sur les figures 2 et 3. Ils présentent une zone de fixation 4, 5, accessible depuis les bords du carénage 1 par des parties ouvertes 6, 7. Ces ouvertures 6, 7 sont aménagées sur des bords non parallèles du carénage, de sorte de présenter une orientation respectivement suivant les axes y, x, et donc perpendiculaire dans ce mode d'exécution. Le point de fixation 2 présente plus particulièrement une forme de boutonnière débouchante, alors que le point de fixation 3 présente une forme de serrure qui s'évase vers l'ouverture 7.

Le procédé de fixation de ce carénage 1 présente les étapes suivantes :
- l'opérateur réalise la fixation au point 2 en manoeuvrant le carénage 1 dans la direction y. Lors de ce mouvement, la partie de carénage devançant la zone de fixation 4 est ouverte et ne gêne donc pas la visibilité de l'opérateur pour une approche précise ;
- l'opérateur pivote ensuite le carénage autour de ce premier point de fixation 2 pour venir encliqueter le second point de fixation 3 selon la direction x. La forme ouverte de la seconde zone de fixation 5 offre le même avantage que précédemment.

Le pré-maintien est alors assuré par les deux points de fixation 2, 3 et l'opérateur a les mains libres pour finaliser la fixation définitive du carénage au niveau des différents points de fixation 2, 3, 8, avec tous moyens prévus à cet effet, à base d'écrous, de clips, ...

Ce principe est particulièrement efficace avec des carénages souples et de petites dimensions. Toutefois il peut être envisagé pour toute sorte de carénage, comprenant d'autres matériaux et dimensions. De plus, le concept ne se limite pas à la forme particulière des points de fixation représentés dans ce mode d'exécution. Les parties de fixation 4, 5 peuvent comprendre des picots pour faciliter le pré-maintien.

Ainsi, la solution permet bien d'atteindre les objets recherchés et présente les avantages suivants :
- le carénage présente deux points de fixation en forme de clés, forme qui permet un accès visible et facile vers une zone de fixation avec le véhicule automobile ;
- de plus, les deux points de fixation en forme de clés présentent deux orientations différentes, ce qui permet leur fixation en deux étapes différentes complémentaires, par deux mouvements distincts.

## Revendications

1. Carénage (1) pour dessous de caisse de véhicule automobile, comprendant deux points de fixation (2, 3) pour assurer un pré-maintien du carénage (1), ces deux points de fixation (2, 3) se présentant sous une forme de clé, avec une zone de fixation (4, 5) débouchant directement sur un bord du carénage par une ouverture (6, 7), et ces deux points de fixation (2, 3) présentant une orientation différente.

2. Carénage (1) selon la revendication 1, **caractérisé en ce que** les deux points de fixation (2, 3) sont positionnés sur deux extrémités antérieures du carénage, de manière à déboucher sur deux côtés différents du carénage (1) pour présenter une orientation (x, y) formant un angle proche de 90 degrés.

3. Carénage (1) selon la revendication 1 ou 2, **caractérisé en ce qu'**il est en matériau plastique souple.

4. Carénage selon une des revendications précédentes, **caractérisé en ce qu'**il présente une petite dimension, de côtés de longueur inférieure à 700 millimètres.

5. Carénage (1) selon une des revendications précédentes, **caractérisé en ce qu'**au moins un des deux points de fixation (2, 3) présente une partie avec des picots pour favoriser le pré-maintien.

6. Carénage (1) selon une des revendications précédentes, **caractérisé en ce qu'**au moins un des deux points de fixation (2) présente une forme en boutonnière débouchante

7. Carénage (1) selon une des revendications précédentes, **caractérisé en ce qu'**il comprend au moins un troisième point de fixation (8).

8. Véhicule automobile comprenant un carénage selon l'une des revendications précédentes.

9. Procédé de fixation d'un carénage de véhicule automobile, comprendant une étape de réalisation d'un pré-maintien du carénage qui comprend les étapes suivantes :
- positionnement d'un premier point de fixation (2) en manoeuvrant le carénage (1) dans une première direction (y) ;
- pivotement du carénage (1) autour de ce premier point de fixation (2) pour approcher un second point de fixation (3) ;
- encliquetage du second point de fixation (3) selon une seconde direction (x).

## Patentansprüche

1. Verkleidung (1) für Kraftfahrzeugunterboden, die zwei Befestigungsstellen (2, 3) aufweist, um ein Vorabhalten der Verkleidung (1) sicherzustellen, wobei diese zwei Befestigungsstellen (2, 3) die Form eines Schlüssels haben, mit einer Befestigungszone (4, 5), die direkt auf einem Rand der Verkleidung durch eine Öffnung (6, 7) mündet, und wobei diese zwei Befestigungsstellen (2, 3) eine unterschiedliche Ausrichtung aufweisen.

2. Verkleidung (1) nach Anspruch 1, **dadurch gekennzeichnet, dass** die zwei Befestigungsstellen (2, 3) auf zwei vorderen Enden der Verkleidung so positioniert sind, dass sie auf zwei unterschiedlichen Seiten der Verkleidung (1) münden, um eine Ausrichtung (x, y) zu präsentieren, die einen Winkel nahe 90 Grad bildet.

3. Verkleidung (1) nach Anspruch 1 oder 2, **dadurch gekennzeichnet, dass** sie aus biegsamem Kunststoffmaterial besteht.

4. Verkleidung nach einem der vorhergehenden Ansprüche, **dadurch gekennzeichnet, dass** sie ein kleines Maß mit Seiten mit einer Länge von weniger als 700 mm aufweist.

5. Verkleidung (1) nach einem der vorhergehenden Ansprüche, **dadurch gekennzeichnet, dass** wenigstens eine der zwei Befestigungsstellen (2, 3) einen Teil mit Noppen aufweist, um das Vorabhalten zu begünstigen.

6. Verkleidung (1) nach einem der vorhergehenden Ansprüche, **dadurch gekennzeichnet, dass** wenigstens eine der zwei Befestigungsstellen (2) eine Form in durchgehender Aussparung aufweist.

7. Verkleidung (1) nach einem der vorhergehenden Ansprüche, **dadurch gekennzeichnet, dass** sie wenigstens eine dritte Befestigungsstelle (8) aufweist.

8. Kraftfahrzeug, das eine Verkleidung nach einem der vorhergehenden Ansprüche aufweist.

9. Verfahren zum Befestigen einer Kraftfahrzeugverkleidung, das einen Schritt des Ausführens eines Vorabhaltens der Verkleidung aufweist, das die folgenden Schritte aufweist:
- Positionieren einer ersten Befestigungsstelle (2) unter Manövrieren der Verkleidung (1) in eine erste Richtung (y),
- Schwenken der Verkleidung (1) um diese erste Befestigungsstelle (2), um sie einer zweiten Befestigungsstelle (3) zu nähern,
- Einrasten der zweiten Befestigungsstelle (3) entlang einer zweiten Richtung (x).

## Claims

1. Fairing (1) for the underside of a motor-vehicle body, comprising two fastening points (2, 3) in order to provide a preliminary hold of the fairing (1), these two fastening points (2, 3), taking the form of a key, with a fastening zone (4, 5) leading directly onto an edge of the fairing via an opening (6, 7), and these two fastening points (2, 3) having a different orientation.

2. Fairing (1) according to Claim 1, **characterized in that** the two fastening points (2, 3) are positioned on two anterior ends of the fairing, so as to lead onto two different sides of the fairing (1) in order to have an orientation (x, y) forming an angle close to 90 degrees.

3. Fairing (1) according to Claim 1 or 2, **characterized in that** it is made of flexible plastic.

4. Fairing according to one of the preceding claims, **characterized in that** it has a small dimension, having sides with a length of less than 700 millimetres.

5. Fairing (1) according to one of the preceding claims, **characterized in that** at least one of the two fastening points (2, 3) has a portion with spurs in order to promote the preliminary hold.

6. Fairing (1) according to one of the preceding claims, **characterized in that** at least one of the two fastening points (2) is shaped like an open-ended buttonhole.

7. Fairing (1) according to one of the preceding claims, **characterized in that** it comprises at least one third fastening point (8).

8. Motor vehicle comprising a fairing according to one of the preceding claims.

9. Method for fastening a motor-vehicle fairing comprising a step of carrying out a preliminary hold of the fairing which comprises the following steps:
- positioning a first fastening point (2) by manoeuvring the fairing (1) in a first direction (y);
- pivoting the fairing (1) about this first fastening point (2) in order to come closer to a second fastening point (3);
- snap-fitting the second fastening point (3) in a second direction (x).
